# EUROPÄISCHE PATENTANMELDUNG

(11) **EP 1 026 220 A1**
(43) Veröffentlichungstag der Anmeldung: **09.08.2000**
(21) Anmeldenummer: 99124334.6
(22) Anmeldetag: 06.12.1999
(51) Int. Cl.: C09K 3/30

(54) **Verfahren zur Herstellung einer Aerosolzusammensetzung**

(30) Priorität: 02.02.1999 DE 19903997
(71) Anmelder: GOLDWELL GmbH, D-64297 Darmstadt (DE)
(72) Erfinder: Grit, Mustafa, Dr., 64579 Gernsheim (DE)

(57) **Zusammenfassung**

Die Erfindung betrifft ein Verfahren zur Herstellung einer als Aerosol abzugebenden Zusammensetzung, die in einem mit Ventil und Sprühkopf ausgestatteten Druckbehälter untergebracht ist und Kohlendioxid als alleiniges Treibmittel enthält, wobei einer solchen Zusammensetzung, die mindestens 5 Gew.-%, berechnet auf die Gesamtzusammensetzung, Wasser enthält und sauer eingestellt ist, entweder eine feste Zubereitung, vorzugsweise ein Pulver oder eine Tablette, zugesetzt wird, die mindestens ein Alkali- oder Erdalkalicarbonat und/oder -hydrogencarbonat in einer solchen Menge enthält, daß sie in der Zusammensetzung nach dem druckdichten Verschließen des Behälters genügend Kohlendioxid-Treibmittel zur Abgabe des Behälterinhalts entwickelt, oder einer solchen Wasser enthaltenden Zusammensetzung eine feste Zubereitung zugesetzt wird, die das (Hydrogen)carbonat im Gemisch mit einer festen Säure oder einem festen sauren Salz in einer solchen Menge enthält, das sie nach dem druckdichten Verschließen des Behälters ebenfalls genügend C0₂ zur Abgabe des Behälterinhalts entwickelt.

Auf diese Weise wird eine einfache Herstellung von C0₂-Aerosolen unter Vermeidung der ansonsten aufwendigen Abfüllung ermöglicht.

## Beschreibung

Die vorliegende Erfindung betrifft ein Verfahren zur Herstellung einer als Aerosol abzugebenden Zusammensetzung, die in einem mit Ventil und Sprühkopf ausgestatteten Behälter untergebracht ist, und Kohlendioxid als Treibmittel enthält.

Derartige Aerosolzusammensetzungen sind seit langem bekannt und beispielsweise in Seifen, Öle, Fette, Wachse, 112. Jahrgang (1986), S. 104-106; H. Meuresch, Aerosol Report, Vol. 15/No. 4 (1976), S. 88-105, und insbesondere der Monographie von W. Tauscher, "Das C0₂-Aerosol" (1985) beschrieben.

Obwohl Kohlendioxid ein inertes, umweltverträgliches und auch preisgünstiges Treibmittel darstellt, wird es aufgrund des relativ hohen apparativen Aufwands bei der Abfüllung entsprechender Produkte nicht sehr häufig eingesetzt.

Die vorliegende Erfindung geht nun von der Aufgabenstellung aus, ein mit geringem Aufwand durchführbares Verfahren zur Herstellung von Aerosolzusammensetzungen aufzufinden, die Kohlendioxid als alleiniges Treibmittel enthalten.

Die Lösung dieser Aufgabe besteht zum einen darin, einer zur Abgabe als Aerosol vorgesehenen wasserhaltigen Zusammensetzung, die in einem mit Ventil und Sprühkopf ausgestaltetem Druckbehälter ausgestattet ist, und die mindestens 5 Gew.-%, berechnet auf die Gesamtzusammensetzung, Wasser enthält und sauer eingestellt ist, eine feste Zubereitung zuzusetzen, die mindestens ein Alkali- und/oder Erdalkalicarbonat und/oder -hydrogencarbonat in einer solchen Menge enthält, daß sie in der Zusammensetzung nach dem druckdichten Verschließen des Behälters genügend Kohlendioxid-Treibmittel zur Abgabe des Behälterinhalts entwickelt.

Alternativ dazu umfaßt eine weitere, ähnliche Lösung, die feste Zubereitung ein Gemisch aus mindestens einem Alkali- oder Erdalkalicarbonat und/oder -hydrogencarbonat und einer festen Säure oder einem festen sauren Salz in einer solchen Menge enthält, daß sie in der Zusammensetzung nach dem druckdichten Verschließen des Behälters genügend Kohlendioxid-Treibmittel zur Abgabe des Behälterinhalts entwickelt.
In diesem Fall muß die Zusammensetzung nicht unbedingt sauer eingestellt sein.

Auf diese Weise ist eine einfache Konfektionierung von C0₂-Aerosolen, falls erwünscht, sogar durch den Verbraucher möglich.

Zur Verwendung in diesem Verfahren sind grundsätzlich alle wasserhaltigen Zusammensetzungen, die als Aerosolspray abgegeben werden können, geeignet, seien es nun Aerosolschäume oder sonstige Sprühzusammensetzungen.

Besonders geeignet sind kosmetische Produkte wie Haut- und Haarpflegemittel, Dusch- und Schaumbäder, Shampoos, Haarsprays, entweder als wäßrig-alkoholische Produkte oder als Schaumsprays, z.B. "Styling-Foams", Parfums, Pharmazeutika, Geruchsverbesserer, Desodorantien, jedoch auch Haushaltsreiniger, Textilbehandlungsmittel, Desinfektions- und Schädlingsbekämpfungsmittel, Fußboden-, Glas- und Möbelpflegemittel, Autopflegemittel etc.

Deren Zusammensetzung ist grundsätzlich bekannt und bedarf daher keiner weiteren Aufzählung.

Der Mindestwassergehalt dieser Zusammensetzungen liegt, wie bereits ausgeführt, bei 5 Gew.-% und ist selbstverständlich abhängig von der Art und sonstigen Zusammensetzung des Produktes.

Vorzugsweise sind mindestens 10 Gew.-%, insbesondere etwa 15 Gew.-% und besonders bevorzugt mindestens etwa 20 Gew.-% Wasser enthalten.

Gemäß einer Variante der Erfindung muß der pH-Wert der Zusammensetzung im sauren Bereich liegen, um eine ausreichende Kohlendioxid-Entwicklung zu gewährleisten.

Der pH-Bereich ist natürlich von der Art und Zusammensetzung des Produktes abhängig; für kosmetische Mittel liegt er vorzugsweise zwischen etwa 2,0 und etwa 6,5, insbesondere etwa 3 und 6.

Gemäß der zweiten Variante der Erfindung wird der pH-Wert durch den Zusatz eines Gemisches aus Carbonat bzw. Hydrogencarbonat und einer festen Säure oder einem festen Säuresatz in der Zusammensetzung so eingestellt, daß eine lebhafte C0₂-Entwicklung stattfindet.

Alkali- und Erdalkalicarbonate bzw. -hydrogencarbonate sind insbesondere Natrium-, Kalium- und Ammoniumcarbonat und -hydrogencarbonat; bevorzugte Erdalkalicarbonate sind Calcium- und Magnesium(hydrogen)carbonat.

Obwohl die Carbonat- bzw. Bicarbonat-Zusammensetzungen grundsätzlich in jeder Festform, beispielsweise als Pulver, Tabletten oder Kapseln, d.h., als Portionspackung eingesetzt werden können, sind Tabletten, aufgrund der dadurch gegebenen einfachen Dosierungsmöglichkeit, bevorzugt.

Der durch die Carbonat- bzw. Bicarbonat-Zugabe im Behältnis zu erreichende Druck liegt bei etwa 3 bis etwa 7 bar, insbesondere etwa 4 bis etwa 6 bar.

Die Relation zwischen dem Druck einerseits und der angewandten Carbonat-Menge in einem Aerosolbehälter von 270 ml Volumen, gefüllt mit 200 ml Wasser, wird im folgenden Diagramm verdeutlicht.

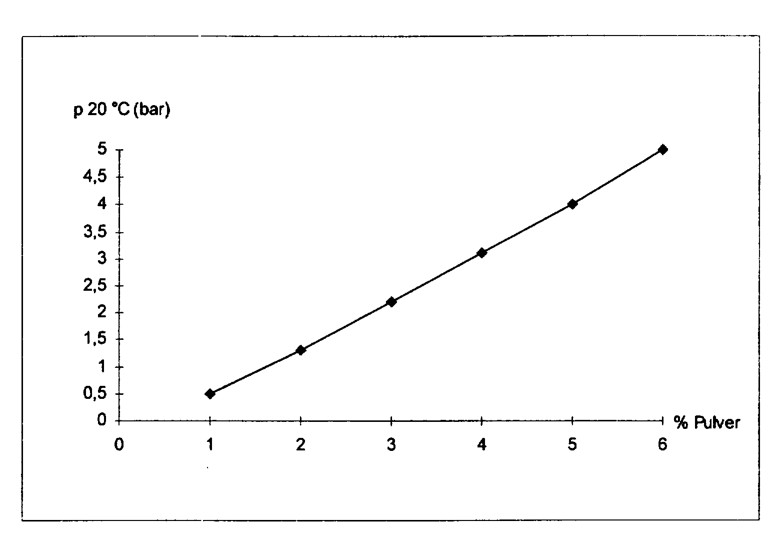

Dabei ist die angewandte Menge eines Pulvers, bestehend aus einem Gemisch aus Citronensäure und Natriumbicarbonat im Gewichtsverhältnis 1 zu 2, in effektiven % gegenüber der erzielten Drucksteigerung aufgetragen.

Geeignete feste Säuren, die im Gemisch mit den Alkalicarbonaten bzw. -hydrogencarbonaten verwendet werden, sind insbesondere Fruchtsäuren, wie Citronensäure, Weinsäure, Apfelsäure, Brenztraubensäure sowie Sorbinsäure, Benzoesäure, Salicylsäure und saure Salze derselben sowie saure anorganische und organische Ammoniumsalze.

Ihre Dosierung erfolgt so, daß die als Aerosol abzugebende Zusammensetzung, je nach ihrer Art und Anwendung, vorzugsweise einen pH-Wert zwischen etwa 2 und 6,5, insbesondere etwa 3 und 6, aufweist.

Das Verhältnis zwischen Säure(salz) und Bicarbonat bzw. Carbonat ist also entsprechend einzustellen.

Für das System Citronensäure zu Natriumbicarbonat hat sich beispielsweise ein Gewichtsverhältnis von 1:1 bis 1:3, insbesondere etwa 1:2, als optimal erwiesen, für das System Citronensäure/Natriumcarbonat oder Calciumcarbonat zwischen 1 zu 0,5 bis 1 zu 2, insbesondere etwa 1 zu 1.

Die Abfüllung kann durch Zusatz des festen (Bi-)Carbonat-Produktes zu der Zusammensetzung und sofortiges Verclinschen der Dose mit Anbringung des Ventils und des Sprühkopfs erfolgen.

Es ist jedoch auch möglich, durch den Verbraucher selbst beispielsweise einen (Bi-)Carbonat-Tablette in die Zusammensetzung einbringen zu lassen und das Behältnis mittels eines mit Schraubverschluß ausgestatteten Ventilverschlusses zu verschließen.

Die Herstellung der Tabletten erfolgt unter Zusatz von inerten Füllstoffen, z.B. Lactose, nach an sich bekannten Verfahren, wie sie beispielsweise in der Monographie von Ullmann, 4. Aufl., Bd. 13, S. 564ff. und Bd. 18, S, 156ff, sowie in den Monographien von Bauer, "Pharmazeutische Technologie" (1986, Thieme Verlag) und Sucker et al., "Pharmazeutische Technologie" (1991, Thieme Verlag) beschrieben sind.

Die folgenden Beispiele illustrieren die Erfindung:

### Beispiel 1

### Haarspray

Einer wäßrig-alkoholischen Zusammensetzung aus

| | |
|---|---|
| 8,0 (Gewichtsteilen) | Vinylpyrrolidon/Vinylacetat-Copolymerisat (Luviskol^{R}VA 64W) |
| 0,3 | Parfum |
| 15,0 | Ethanol |
| 0,2 | Nichtionischer Emulgator |
| ad 100,0 | Wasser |

In einem Weißblechbehälter wurden 4 Gewichtsteile eines Pulvers einer 1 zu 1-Mischung aus Citronensäure und Caliumcarbonat zugesetzt und die Dose mit einem Ventil verclinscht.

Es wurde ein Aerosolspray mit einem Innendruck von 6 bar erhalten.

### Beispiel 2

### Haarwaschmittel

Einer wäßrigen Zusammensetzung aus

| | |
|---|---|
| 5,0 (Gewichtsteilen) | Laurylether (∼2,5EO)sulfat, |
| 3,0 | Decylglucosid |
| 2,0 | Natriumlauroylglutamat |
| 0,3 | Parfum |
| 1,0 | Kationisch derivatisiertes Pflanzenproteinhydrolysat (Gluadin^{R}) |
| ad 100,0 | Wasser |

in einer Weißblechdose wurde eine 7g-Tablette, bestehend aus
58 Gewichtsteilen Natriumhydrogencarbonat,
29 Gewichtsteilen Citronensäure, und
13 Gewichtsteilen Lactose zugesetzt.

Anschließend wurde auf die Dose ein Ventil aufgebracht.
Nach 5 Minuten hatte sich ein Druck von 6 bar eingestellt.

### Beispiel 3

### Haarspray

In einer Lösung aus

| | |
|---|---|
| 5,0 (Gewichtsteilen) | Vinylpyrrolidon/Vinylacetat-Copolymerisat (Luviskol^{R}VA 64W) |
| 0,3 | Parfum |
| 60,0 | Ethanol |
| 0,3 | Weichmacher |
| 0,3 | Nichtionischer Emulgator |
| ad 100,0 | Wasser |

in einer Weißblechaerosoldose wurde ein Pulver aus 2 Gewichtsteilen Citronensäure und 4 Gewichtsteilen Natriumbicarbonat eingebracht und die Dose mit einem Ventil verschlossen. Es entstand ein Innendruck von etwa 5,5 bar.

### Beispiel 4

### Duschschaum

In ein Gemisch aus

| | |
|---|---|
| 10,0 (Gewichtsteilen) | Natriumlaurylethersulfat (∼2,5EO) |
| 5,0 | Cocoylamidopropylbetain |
| 5,0 | C₁₂-C₁₄-Alkylpolyglucosid (P.D.: ∼1,5) |
| 0,5 | Parfum |
| ad pH3 | Citronensäure |
| ad 100,0 | Wasser, |

das in einer innenlackierten Aersolmonoblockdose untergebracht war, wurden 4 Gewichtsteile Natriumbicarbonat- Pulver zugesetzt und die Dose mit einem Ventil verschlossen. Der erreichte Innendruck betrug 5 bar.

### Beispiel 5

### Haushaltsreiniger

In eine wäßrige Zusammensetzung aus

| | |
|---|---|
| 10,0 (Gewichtsteilen) | Natriumlaurylsulfat, |
| 2,5 | Laurylphenolethoxylat (∼5 EO) |
| 5,0 | Ethanol |
| 0,5 | Parfum |
| ad pH3,5 | Weinsäure |
| ad 100,0 | Wasser, |

die in eine innenlackierte Weißblechdose abgepackt war, wurden 4 Gewichtsteile Natriumcarbonat in Tablettenform eingebracht und das Behältnis mit einem Ventil verschlossen.
Der erreichte Innendruck betrug 6 bar.

### Beispiel 6

### Haarkur

Zu einer in einer Weißblechdose abgepackten Zusammensetzung aus

| | |
|---|---|
| 1,0 (Gewichtsteilen) | Esterquat (Tetranyl^{R}CO40) |
| 1,0 | Paraffinöl |
| 1,0 | Triglycerin |
| 2,5 | Benzyloxyethanol |
| 1,3 | Stearyltrimethylammoniumchlorid |
| 0,4 | Parfum |
| 3,0 | Behensäure |
| 5,0 | Cetylstearylalkohol |
| ad 100,0 | Wasser |

die einen pH-Wert von etwa 2,5 aufwies, wurden 4 Gewichtsteile eines Natriumcarbonat-Granulats zugefügt und die Dose mit einem Ventil verschlossen.
Es wurde ein Innendruck von etwa 5 bar erzielt, das Produkt wurde als Schaumspray abgegeben.

## Patentansprüche

1. Verfahren zur Herstellung einer als Aerosol abzugebenden Zusammensetzung, die in einem mit Ventil und Sprühkopf ausgestatteten Druckbehälter untergebracht ist und Kohlendioxid als alleiniges Treibmittel enthält, dadurch gekennzeichnet, daß einer solchen Zusammensetzung, die mindestens 5 Gew.-%, berechnet auf die Gesamtzusammensetzung, Wasser enthält und sauer eingestellt ist, eine feste Zubereitung zugesetzt wird, die mindestens ein Alkali- oder Erdalkalicarbonat und/oder -hydrogencarbonat in einer solchen Menge enthält, daß sie in der Zusammensetzung nach dem druckdichten Verschließen des Behälters genügend Kohlendioxid-Treibmittel zur Abgabe des Behälterinhalts entwickelt.

2. Verfahren zur Herstellung einer als Aerosol abzugebenden Zusammensetzung, die in einem mit Ventil und Sprühkopf ausgestatteten Druckbehälter untergebracht ist und Kohlendioxid als alleiniges Treibmittel enthält, dadurch gekennzeichnet, daß einer solchen Zusammensetzung, die mindestens 5 Gew.-%, berechnet auf die Gesamtzusammensetzung, Wasser enthält, eine feste Zubereitung zugesetzt wird, die ein Gemisch aus mindestens einem Alkali- oder Erdalkalicarbonat und/oder - hydrogencarbonat und einer festen Säure oder einem festen sauren Salz in einer solchen Menge enthält, daß sie in der Zusammensetzung nach dem druckdichten Verschließen des Behälters genügend Kohlendioxid-Treibmittel zur Abgabe des Behälterinhalts entwickelt.

3. Verfahren nach Anspruch 1 oder 2, dadurch gekennzeichnet, daß die feste Carbonat-und/ oder Hydrogencarbonat-Zubereitung als Pulver, Tablette oder Granulat vorliegt.

4. Verfahren nach Anspruch 2 oder 3, dadurch gekennzeichnet, daß als Kohlendioxidträger ein Gemisch aus Citronensäure und Natriumcarbonat und/oder Natriumhydrogencarbonat eingesetzt wird.
